# EUROPEAN PATENT APPLICATION

(11) **EP 1 251 576 A2**
(43) Date of publication of application: **23.10.2002**
(21) Application number: 02008745.8
(22) Date of filing: 18.04.2002
(51) Int. Cl.: H01M 4/58, H01M 4/02

(54) **Anode active material and nonaqueous electrolyte secondary battery**

(30) Priority: 20.04.2001 JP 2001123533
(71) Applicant: SONY CORPORATION, Tokyo (JP)
(72) Inventor: Akashi, Hiroyuki, Shinagawa-ku, Tokyo (JP); Adachi, Momoe, Shinagawa-ku, Tokyo (JP); Fujita, Shigeru, Shinagawa-ku, Tokyo (JP)
(74) Representative: Müller - Hoffmann & Partner

(57) **Abstract**

The present invention relates to an anode material excellent in its charging and discharging characteristics and a secondary battery excellent in its charging and discharging cyclic characteristics. An anode active material is used for a nonaqueous electrolyte secondary battery including an anode having the anode active material, a cathode having a cathode active material and a nonaqueous electrolyte. The capacity of the anode is expressed by the sum of a capacity component obtained when light metal is doped and dedoped in an ionic state and a capacity component obtained when the light metal is deposited and dissolved. The anode includes an anode base material capable of doping and dedoping the light metal in an ionic state and a fibrous material having an electric conductivity. The anode may comprise granulated graphite mixed with fibrous graphite.

## Description

### BACKGROUND OF THE INVENTION

### Field of the Invention

The present invention relates to an anode active material and a nonaqueous electrolyte secondary battery including an anode including the anode active material, a cathode including a cathode active material and a nonaqueous electrolyte.

### Description of the Related Art

In recent years, portable electronic devices such as portable telephones, PDA (portable information communication terminals: Personal Digital Assistants), cam coders, note book type personal computers, etc. have been widely brought to market. Thus, it has been eagerly desired to increase the driving time thereof. Since most of the portable electronic devices usually employ secondary batteries as their driving power sources, a technique for development of the secondary battery with high capacity and high energy density is considered to be most important and essential in putting the portable electronic devices to practical use.

As the secondary batteries, there have been hitherto well-known lead-acid batteries, nickel-cadmium batteries, lithium-ion secondary batteries using a material capable of doping to or dedoping from an anode lithium (Li) such as a carbonaceous material or lithium metal secondary batteries using metallic lithium for an anode and so on.

The volumetric energy density of the lithium metal secondary battery may be possibly higher than that of the lithium-ion secondary battery which has been already manufactured as a commercial goods, so that the lithium metal secondary battery has been paid attention to as the most prominent candidate of high energy density type new generation batteries. The lithium metal secondary battery uses the deposition and dissolution reaction of lithium metal for an anode reaction. Here, the lithium metal has a theoretical electrochemical equivalent, that is, a charging and discharging capacity having a value as large as 2054 mAh/cm³. Since this value corresponds to 2.5 times as large as that of the graphite anode material of a general-purpose lithium-ion secondary battery, it is expected that a high energy density type secondary battery further exceeding existing batteries is realized in theoretical point of view by utilizing the lithium metal.

Under these circumstances, the study and development for putting the lithium metal secondary battery into practical use have been vigorously carried out by many research workers as disclosed in, for example, "Lithium Batteries" (edited by JEAN-PAULGABANO, ACADEMIC PRESS, 1983, London, New York) or the like.

However, the volume change of the lithium metal used as the anode active material upon charging and discharging is large in the existing lithium metal secondary battery, and accordingly, the charging and discharging cyclic property is suddenly deteriorated, so that the lithium metal secondary battery has inconveniently a serious technical problem in putting this secondary battery to practical use.

Thus, the applicant of the present invention proposed in the previously filed application a secondary battery by a new battery reaction mechanism in which charging and discharging operations are repeated by a charging and discharging reaction mechanism for introducing the deposition and dissolution reaction of the lithium metal to a part of an anode reaction and also introducing the doping and dedoping reaction of lithium to the anode reaction. As described above, the doping and dedoping reaction of lithium is combined with the deposition and dissolution reaction of the lithium metal so that a secondary battery having the high energy density corresponding to that of the lithium secondary battery and an excellent charging and discharging cyclic property corresponding to that of the lithium-ion secondary battery is realized.

Now, when such a battery is defined from the viewpoint of operation principle of a battery, it may be represented as a "nonaqueous secondary battery in which the charging and discharging capacity of an anode is expressed by the sum of a charging and discharging capacity component by the electrochemical doping and dedoping reaction of alkali metal ions or alkali earth metal ions and a charging and discharging capacity component by the electrochemical deposition and dissolution reaction of alkali metal ions or alkali earth metal ions".

Here, the electrochemical doping and dedoping reactions mean reactions that ions are electrochemically doped to or dedoped from an electrode without losing their ionic characteristics. For instance, the intercalation reaction of lithium ions to or the deintercalation reaction of lithium ions from graphite or the doping of lithium ions to or the dedoping of lithium ions from amorphous carbon corresponds to the above-described electrochemical doping reaction and dedoping reaction.

The inventors of the present invention eagerly studied and examined to put the above described secondary battery to practical use, and then, they found that an anode material having the above-described charging and discharging reaction mechanism had such a charging and discharging capacity as to be liable to be deteriorated by repeating the charging and discharging operations. Thus, when the secondary battery is formed by employing the anode material whose capacity is easily deteriorated as described above, the charging and discharging cyclic characteristics of the secondary battery are also readily deteriorated. Therefore, it is very difficult to put the above-described secondary battery to practical use.

Accordingly, the anode material excellent in its charging and discharging capacity characteristics and a nonaqueous electrolyte secondary battery using the anode material and excellent in its charging and discharging cyclic characteristics have not been established yet.

### SUMMARY OF THE INVENTION

Thus, the present invention is proposed by taking the above circumstances into consideration and it is an object of the present invention to provide an anode material excellent in its charging and discharging capacity characteristics and a secondary battery excellent in its charging and discharging cyclic characteristics.

In order to achieve the above-described object, according to the present invention, there is provided an anode active material used for a nonaqueous electrolyte secondary battery comprising an anode including the anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes anode base materials capable of doping and dedoping the light metal in an ionic state and fibrous materials having an electric conductivity.

Since the anode active material according to the present invention configured as described above includes the fibrous materials having the electric conductivity, the current collecting property of the entire body of the anode is prevented from being deteriorated due to a separation phenomenon between the anode base materials or between the anode base materials and an anode current collector which is generated at the time of charging and discharging reaction and the chemical deterioration of a nonaqueous electrolyte material is prevented.

Further, in the anode active material according to the present invention configured as described above, the fibrous materials having the electric conductivity are included in the anode active material capable of doping and dedoping the light metal in the ionic state, that is, in the anode base materials, so that the fibrous materials enter parts between the anode base materials, and between the anode base materials and the anode current collector. Thus, the fibrous materials are brought into a state in which they come into contact with the anode base materials and the anode current collector.

Then, since the fibrous materials having the electric conductivity respectively serve to connect the anode base materials together and the anode base materials to the anode current collector, the adhesive strength between the anode base materials and between the anode base materials and the anode current collector is increased. Accordingly, even when the anode active material is used as the anode material of the nonaqueous electrolyte secondary battery is charged so that lithium metal is deposited on the adhesive interfaces between the anode base materials and on the adhesive interfaces between the anode base materials and the anode current collector, the separation phenomenon of the anode active material from the current collector, that is, the destruction of the adhesive interfaces is prevented from occurring. Thus, the deterioration of the current collecting performance of the anode active material is prevented. As a result, the increase of a polarization phenomenon upon charging and discharging reaction resulting from the degradation of the current collecting performance of the anode material is prevented. Further, the induction of the chemical deterioration of the nonaqueous electrolyte materials on the surfaces of the anode and the cathode is avoided.

Further, according to the present invention, there is provided a nonaqueous electrolyte secondary battery comprising an anode including an anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes anode base materials capable of doping and dedoping the light metal in an ionic state and fibrous materials having an electric conductivity.

In the nonaqueous electrolyte secondary battery configured as described above, the conductive fibrous materials are included in the anode active material capable of doping and dedoping the light metal in the ionic state, that is, in the anode base materials so that the fibrous materials enter parts between the anode base materials, and between the anode base materials and the anode current collector to be brought into a state that they come into contact with the anode base materials and the anode current collector.

Then, since the fibrous materials having the electric conductivity respectively serve to connect the anode base materials together and the anode base materials to the anode current collector, the adhesive strength between the anode base materials and between the anode base materials and the anode current collector is increased. Accordingly, even when the anode active material is used as the anode material of the above-described nonaqueous electrolyte secondary battery and the nonaqueous electrolyte secondary battery is charged so that lithium metal is deposited on the adhesive interfaces between the anode base materials and on the adhesive interfaces between the anode base materials and the anode current collector, the separation phenomenon of the anode active material from the current collector, that is, the destruction of the adhesive interfaces is prevented from occurring. Thus, the deterioration of the current collecting performance of the anode active material is prevented. As a result, the increase of a polarization phenomenon upon charging and discharging reaction resulting from the degradation of the current collecting performance of the anode material is prevented. Further, the induction of the chemical deterioration of the nonaqueous electrolyte materials on the surfaces of the anode and the cathode is avoided.

### BRIEF DESCRIPTION OF THE DRAWINGS

The object and other objects and advantages of the present invention will appear more clearly from the following specification in conjunction with the accompanying drawings in which:
Fig. 1 is a longitudinally sectional view showing one structural example of a nonaqueous electrolyte secondary battery to which the present invention is applied.
Fig. 2 is a longitudinally sectional view showing the structure of an evaluating coin cell manufactured in an example.
Fig. 3 is a characteristic view showing a charging and discharging curve in an Example 1.
Fig. 4 is a characteristic view showing charging and discharging curves in the Comparative Example 1.
Fig. 5 is a characteristic view showing the relation between the number of charging and discharging cycles and a discharging capacity ratio.
Fig. 6 is a characteristic view showing the relation between the number of charging and discharging cycles and a discharging capacity ratio.
Fig. 7 is a characteristic view showing the relation between the number of charging and discharging cycles and a discharging capacity ratio.

### DETAILED DESCRIPTION OF THE PREFERRED EMBODIMENT

Now, a specific embodiment of a nonaqueous electrolyte secondary battery will be described in detail by referring to the accompanying drawings.

In a nonaqueous electrolyte secondary battery according to the present invention, light metal begins to be deposited in an anode during a charging operation when open circuit voltage (battery voltage) is lower than overcharge voltage. That is, in this nonaqueous electrolyte secondary battery, when the open circuit voltage is lower than the overcharge voltage, the light metal is deposited on the anode and the capacity of the anode is expressed by the sum of a capacity component obtained when the light metal is doped and dedoped in an ionic state and a capacity component obtained when the light metal is deposited and dissolved. Then, in this nonaqueous electrolyte secondary battery, the light metal begins to be deposited on the anode when the open circuit voltage (battery voltage) is lower than the overcharge voltage. The detail of the above will be described later.

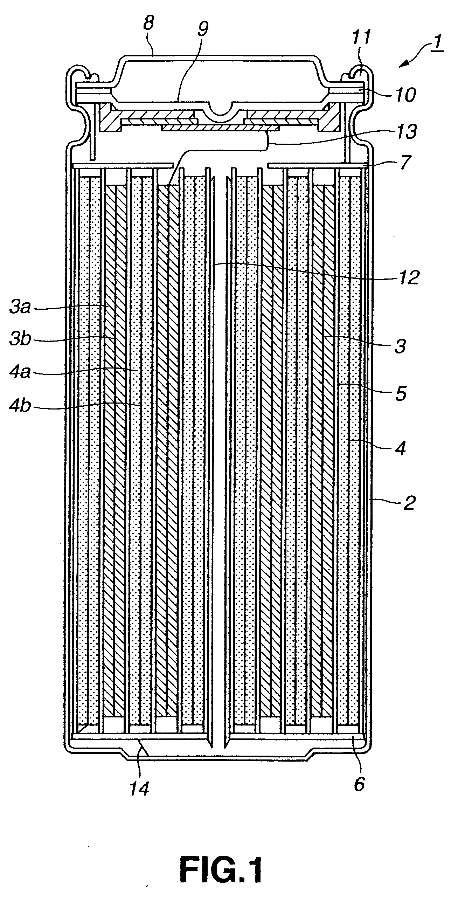

Now, the present invention will be described by referring to a nonaqueous electrolyte secondary battery 1 using lithium as light metal shown in Fig. 1 as an example. The nonaqueous electrolyte secondary battery 1 to which the present invention is applied has a spirally coiled electrode body on which an elongated cathode 3 and an elongated anode 4 are coiled through separators 5 in a substantially hollow and cylindrical battery can 2. The battery can 2 is composed of, for example, iron plated with nickel and has one end part closed and the other end part opened. In the battery can 2, a pair of insulating plates 6 and 7 are respectively arranged perpendicularly to the peripheral surface of the spirally coiled electrode body so as to sandwich the spirally coiled electrode body in therebetween.

To the open end part of the battery can 2, a battery cover 8, a safety valve mechanism 9 provided inside the battery cover 8 and a positive temperature coefficient element (refer it to as a PTC element, hereinafter) 10 are attached by caulking a gasket 11. The inner part of the battery can 2 is sealed. The battery cover 8 is composed of, for instance, a material similar to that of the battery can 2. The safety valve mechanism 9 is electrically connected to the battery cover 8 through the PTC element 10. When the internal pressure of the battery becomes a prescribed value or higher due to an internal short circuit or an external heat or the like, the safety valve mechanism 9 is raised to be deformed so that the battery cover 8 is electrically disconnected from the spirally coiled electrode body. The PTC element 10 is provided with, what is called a temperature fuse function for restricting an electric current due to the increase of a resistance value when temperature rises to prevent an abnormal heat generation owing to large electric current. The gasket 11 is composed of, for instance, an insulating material and asphalt is applied to the surface thereof.

The spirally coiled electrode body is formed by coiling the elongated cathode 3 and the elongated anode 4 through the separators 5 with, for instance a center pin 12 disposed at a central part. To the cathode 3 of the spirally coiled electrode body, a cathode lead 13 made of aluminum is connected. To the anode 4, an anode lead 14 made of nickel is connected. The cathode lead 13 is welded to the safety valve mechanism 9 to be electrically connected to the battery cover 8, and the anode lead 14 is welded to the battery can 2 to be electrically connected to the battery can 2. Further, the separators 5 disposed between the cathode 3 and the anode 4 are impregnated with nonaqueous electrolyte solution.

The cathode 3 has, for instance, a cathode composite mixture layer 3a and a cathode current collector 3b. The cathode current collector 3b is composed of, for instance, metal foil such as aluminum (Al) foil. The cathode composite mixture layer 3a, includes, for instance, a cathode active material, a conductive agent such as graphite and a binding agent such as polyvinylidene fluoride.

As the cathode active materials, there may be suitably used compounds including lithium as light metal such as lithium oxides, lithium sulfides or intercalation compounds including lithium. A single material of these materials may be used or two or more kinds of materials of these materials may be mixed together to use the mixture. Especially, in order to increase energy density, a lithium composite oxide having LiMO₂ as a main material may be preferably included as the cathode active material. M preferably corresponds to one or more kinds of transition metals. Specifically, at least one kind of material is preferably included between cobalt (Co), nickel (Ni), manganese (Mn), iron (Fe), aluminum (Al), vanadium (V) and titanium (Ti). Additionally, as the lithium composite oxides, there may be employed LiₓMn₂O₄ having a spinel structure and LiₓFePO₄ having an olivine structure.

The above-described lithium composite oxide is prepared in such a manner that, for instance, lithium carbonate, lithium nitrate, lithium oxide or lithium hydroxide is mixed with carbonate, nitrate, oxide or hydroxide of transition metal so as to have a desired composition, the mixture is pulverized and the pulverized product is sintered at temperature within a range of 600 °C to 1000°C.

The cathode composite mixture layer 3a preferably includes lithium corresponding to the charging and discharging capacity of 280 mAh or more for 1 g of anode active material under a steady state (for example, after charging and discharging operations are repeated about five times) from the viewpoint of increasing the charging and discharging capacity. Further, the cathode composite mixture layer 3a may include more preferably the lithium corresponding to the charging and discharging capacity of 350 mAh or more. However, lithium does not necessarily need to be completely supplied from the cathode composite mixture layer 3a, that is, the cathode 3 and may exist in the entire part of the battery. For instance, lithium metal or the like is stuck to the anode 4 so that lithium can be supplied to the battery. The amount of lithium in the battery is determined by measuring the discharging capacity of the battery.

The cathode composite mixture layer 3a may further include metal carbonate such as lithium carbonate (Li₂CO₃). When the cathode composite mixture layer includes the metal carbonate as described above, charging and discharging cyclic characteristics can be more improved. This may be considered to be due to a fact that the metal carbonate is partly decomposed on the cathode 3 to form a stable coat on the anode 4.

The anode 4 has, for instance, an anode composite mixture layer 4a and an anode current collector 4b. The anode current collector 4b is composed of, for instance, a metal foil such as a copper foil (Cu). The anode composite mixture layer 4a includes as an anode active material, for instance, an anode base material capable of doping and dedoping lithium in an ionic state. Here, the doping of lithium in an ionic state means that lithium is present in an ionic state, for instance, as representative of the electrochemical intercalation reaction of lithium ions relative to graphite and is different from the deposition of lithium in a metallic state in conceptual point of view. For simplifying the explanation in the following description, to dope and dedope lithium as light metal in an ionic state may be sometimes simply represented as the doping and dedoping of lithium.

In the structure of the anode, when the electrode reaction of the anode upon charging and discharging operations can constitute a battery system expressed by the sum of a charging and discharging capacity component by the electrochemical doping and dedoping reactions of light metal ions and a charging and discharging capacity component by the electrochemical deposition and dissolution reactions, the composition of materials of the anode will not be specifically limited. In other words, in the nonaqueous electrolyte secondary battery 1, when the electrode reaction of the anode upon charging and discharging operations can constitute a battery system expressed by the sum of a charging and discharging capacity component by the electrochemical doping and dedoping of lithium ions and a charging and discharging capacity component by the electrochemical deposition and dissolution reactions of lithium, the composition of materials of the anode will not be specifically limited.

As a specific example of the composition of materials of the anode, for instance, there may be considered such a form as to realize the electrochemical deposition and dissolution reactions of light metal on the surface of a carbonaceous material capable of electrochemically doping and dedoping light metal ions. In this case, according to the present invention, the carbonaceous material is defined as a "anode base material" and both the materials of the light metal to be deposited and dissolved and the anode base material are defined as "anode active materials". That is, as the specific example of the composition of materials of the anode in the nonaqueous electrolyte secondary battery 1, may be exemplified such a form as to realize the electrochemical deposition and dissolution reactions of lithium on the surface of the carbonaceous material capable of electrochemically doping and dedoping the lithium ions. In this case, the carbonaceous material is defined as the "anode base material" and both the materials of lithium to be deposited and dissolved and the anode base material are defined as the "anode active materials".

As the anode base material, there may be theoretically employed materials capable of electrochemically doping and dedoping light metal ions. More specifically, there may be used carbonaceous materials such as graphite, non-graphitizable carbons, graphitizable carbons, crystalline silicon, amorphous silicon, silicon oxides, silicon nitrides, LiM₃, conductive polymers such as polyacetylene, polyaniline, polypyrrole, etc.

Graphite which has a relatively large electrochemical equivalent and a relatively small volumetric change upon charging and discharging reaction is the most suitable anode base material among the above-described materials.

In addition, these materials may be independently used, or when a synergistic effect due to a mixture can be anticipated, a plurality of kinds of the above-described materials may be mixed together to use the mixture.

The configuration of the anode base material is not particularly limited so that the anode base material of an arbitrary configuration can be employed. However, in order to increase the coating density of the anode composite mixture when the anode is manufactured, a granulated anode base material is preferably employed. Further, a fibrous material may be used as the anode base material. In this case, the anode base material needs to have a bulk density of a prescribed value or higher to improve the coating density of the anode composite mixture when the anode is manufactured. For example, when fibrous graphite is used as the anode base material, the bulk density of the fibrous graphite is preferably 0.6 or higher. When the bulk density of the fibrous graphite is lower than 0.6, the coating density of the anode composite mixture when the anode is manufactured cannot be completely increased. Accordingly, when the fibrous graphite is employed as the anode base material, the fibrous graphite whose bulk density is 0.6 or higher is employed so that the coating density of the anode composite mixture when the anode is manufactured can be raised.

Now, carbonaceous materials preferably suitably employed for the anode base material in the present invention will be specifically described below.

A graphite material preferably has a true density of 2.1g/cm³ and more preferably has a true density of 2.18g/cm³ or higher. For obtaining such a true density, the C-axis crystallite thickness of the (002) plane measured by an X-ray diffraction method needs to be 14.0 nm or more. Further, the spacing of the (002) plane measured by the X-ray diffraction method is preferably smaller than 0.340 nm, and more preferably not smaller than 0.335 nm and not larger than 0.337 nm.

The graphite material may be natural graphite or artificial graphite.

The artificial graphite is obtained by carbonizing an organic material and treating the carbonized material at high temperature. Coal or pitch is representative of the organic material as the starting raw material of the artificial graphite. As the pitch, may be employed the pitch obtained by performing operations such as a distillation including a vacuum distillation, an atmospheric distillation, a steam distillation, a thermal polycondensation, an extraction, a chemical polycondensation to tar, asphalt or the like got by a high temperature thermal cracking such as coal tar, ethylene bottom oil, crude oil, etc. and other pitch produced by carbonizing wood.

Further, as the starting raw material of the pitch, there may be exemplified a polyvinyl chloride resin, a polyvinyl acetate resin, a polyvinyl butylate resin, a 3, 5-dimethyl phenol resin.

These coal and pitch exist in a liquid state at the temperature as high as about 400°C while the starting raw material is carbonized. The temperature is held at the above temperature so that aromatic ring compounds are condensed to become polycyclic aromatic compounds with the orientation of lamination. When the temperature becomes 500°C or higher, the carbon precursor of a solid, that is, semi-coke is formed. The above-described process is called a liquid-phase carbonization process which is a typical process for producing graphitizable carbon.

As the organic materials serving as the starting raw materials of the artificial graphite, there may be employed condensed polycyclic hydrocarbon compounds such as naphthalene, phenanthrene, anthracene, triphenylene, pyrene, perylene, pentaphene, pentacene, etc., other derivatives or mixtures of them such as carboxylic acid, carboxylicanhydride, carboxylic imide, etc., condensed heterocyclic compounds such as acenaphthylene, indole, isoindole, quinoline, isoquinoline, quinoxaline, phthalazine, carbazole, acridine, phenazine, phenanthridine, and derivatives of them.

When the artificial graphite is produced by using the above-described organic materials as the staring raw materials, for instance, after any of the above-described organic materials is carbonized at the temperature of 300° C to 700°C in the air flow of inert gas such as nitrogen, the carbonized material is sintered in the air flow of inert gas under conditions including the temperature raising speed of 1°C/minute to 1000°C/minute, the ultimate temperature of 900° C to 1500°C, and holding time of 0 to about 30 hours at the ultimate temperature. Further, the sintered material is thermally treated at 2000°C or higher, preferably at 2500°C or higher. Occasionally, the carbonizing or the sintering operation may be omitted.

The graphite material produced in accordance with the above-described operations is classified or pulverized and classified and the pulverized and classified graphite material is utilized for the anode material. Here, the pulverizing operation may be carried out before or after the carbonizing operation and the sintering operation, or during the temperature raising process before the graphitization. Further, the classified graphite material or the pulverized and classified graphite material finally undergoes a thermal treatment for graphitization in its powdered state.

In order to obtain graphite powder high in its bulk density and breaking strength, the raw material is preferably molded and the molded material is thermally treated to pulverize and classify an obtained graphitized compact.

For producing the above-described graphitized compact, coke as filler is mixed with binder pitch as a binder or a sintering agent to mold the mixture. Then, a sintering process in which the obtained compact is thermally treated at the low temperature of 1000°C or lower and a pitch impregnating process in which the compact is impregnated with molten binder pitch are repeated several times, and then, the compact is thermally treated at high temperature. The binder pitch with which the graphitized compact is impregnated is carbonized in the above-described thermal treatment process and graphitized. Then, the graphitized compact is pulverized to obtain graphite powder.

The graphite powder obtained in such a manner, that is, the pulverized powder of the graphitized compact is high in its bulk density and its breaking strength. Accordingly, this graphite powder is used so that an electrode excellent in its performance can be obtained.

Since the graphite powder, that is, the pulverized powder of the graphitized compact employ the filler (coke) and the binder pitch as its raw materials, the graphite powder is graphitized as a polycrystalline substance and sulfur or nitrogen contained in the raw materials are produced as gas upon thermal treatment. Therefore, micro holes are formed in graphite particles. When the graphite powder having holes formed in its particles is used as the anode base material, the reaction of the anode, that is, the doping and dedoping reactions of lithium are apt to be readily advanced. Besides, a productive efficiency is advantageously improved in industrial point of view.

As the raw material of the compact, the filler having a compactibility and a sintering property in itself may be employed. In this case, the binder pitch does not need to be used.

As the non-graphitizable carbon materials, are preferably employed materials having material parameters that the spacing of the (002) plane is 0.37 nm or larger, a true density is lower than 1.70 g/cm³ and a heat generation peak is not present within a range of 700°C or higher in a differential thermal analysis (DTA) in air.

Such non-graphitizable carbon materials are obtained by thermally treating organic materials at the temperature of about 1200°C.

As representative starting raw materials used when the non-graphitizable carbon materials are produced, there may be exemplified homopolymers such as furfuryl alcohol or furfural, copolymers, or furan resins copolymerized with other resins. Further, there may be employed conjugated resins such as phenol resins, acrylic resins, vinyl halide resins, polyimide resins, polyamide imide resins, polyamide resins, polyacetylene, poly (p-phenylene), etc., cellulose and derivatives thereof, crustacea including coffee beans, bamboo and chitosan, bio-cellulose using bacteria and other arbitrary organic polymer compounds.

A functional group including oxygen is introduced to petroleum pitch having a specific atomic ratio H/C, and, what is called oxygen bridged petroleum pitch is not melted in the carbonizing process at 400°C or higher and finally becomes a non-graphitizable carbon material in a solid phase state like the above-described furan resins.

The above-described petroleum pitch can be obtained by carrying out operations including a distillation such as a vacuum distillation, an atmospheric distillation and a steam distillation, a thermal polycondensation, an extraction, a chemical polycondensation on tar, asphalt and the like got by the high temperature thermal cracking of coal tar, ethylene bottom oil, crude oil and so on. At this time, the atomic ratio H/C of the petroleum pitch is important. For producing the non-graphitizable carbon, the atomic ratio H/C needs to range from 0.6 to 0.8.

While specific means for forming an oxygen bridge in the petroleum pitch is not especially limited, there may be used, for instance, a wet method by aqueous solution of nitric acid, mixed acid, sulfuric acid, hypochlorous acid, etc., a dry method by oxidizing gas such as air or oxygen, and a reaction by solid reagent such as sulfur, ammonium sulfate, ammonia persulfate, ferric chloride, etc.

Here, although the percentage content of oxygen when the oxygen bridge is formed in the petroleum pitch is not especially limited to a prescribed value, it is preferably 3 % or more, and more preferably, 5 % or more, as disclosed in Japanese Patent Application Laid-Open No. hei. 3-252053. The crystal structure of a finally produced carbon material depends on the percentage content of oxygen. Accordingly, when the percentage content of oxygen is located within the above-described range, the non-graphitizable carbon material has the material parameters that the above-described spacing of the (002) plane is 0.37 nm or larger and the heat generation peak is not present within the range of 700°C or higher in accordance with the DAT in the air flow and the capacity of the anode is improved.

The starting raw materials used when the non-graphitizable carbon material is produced are not limited to the above-described materials, it is to be understood that all other organic materials, that is, any of the organic materials which becomes the non-graphitizable carbon material via a solid-phase carbonization process by an oxygen bridging process or the like may be employed.

The non-graphitizable carbon material is obtained in accordance with the carbonization of the above-described organic materials by sintering them. The sintering operation is preferably carried out in accordance with processes described below.

Specifically, to synthesize the non-graphitizable carbon material, after the organic material is carbonized at the temperature of 300°C to 700°C, the carbonized organic material is sintered under the conditions including the temperature raising speed of 1°C/minute to 100°C/minute, the ultimate temperature of 900°C to 1300°C and the holding time of 0 to about 30 hours at the ultimate temperature. Occasionally, the carbonizing operation may be omitted. Then, the sintered material thus obtained is subsequently pulverized and classified and supplied to the anode. The pulverizing operation may be performed before or after the carbonizing operation, the sintering operation or a high temperature thermal treatment, or during the temperature raising process.

Compounds including phosphorus, oxygen and carbon as main components described in Japanese Patent Application Laid-Open No. hei. 3-137010 as well as the non-graphitizable carbon materials using the above-described organic materials as the starting raw materials also have material values similar to those of the non-graphitizable carbon material, so that they are preferable as materials of the anode base material.

In the nonaqueous electrolyte secondary battery 1, fibrous materials having an electric conductivity (abbreviated as conductive fibers, hereinafter) are included in the carbon material as the anode base material.

When the anode base material which constitutes the anode active material having the above-described charging and discharging reaction mechanism is used for the secondary battery and the charging and discharging operations are repeated, the charging and discharging capacity thereof is inconveniently readily deteriorated. Then, when the anode material with a capacity readily deteriorated is employed to form the secondary battery, the charging and discharging cyclic property of the secondary battery is also easily degraded. Therefore, this is a serious problem in putting the secondary battery to practical use.

Thus, as a result of earnestly examining a cause that the charging and discharging cyclic characteristics of the anode material were deteriorated, it was recognized that a main cause of a charging and discharging characteristic deterioration phenomenon resulted from the increase of a reaction polarization phenomenon due to the separation phenomenon of the anode active materials from the anode current collector proceeding during a charging reaction, which is characteristic of the battery having the above-described charging and discharging reaction mechanism.

That is, for instance, when granulated graphite is employed as the anode base material to form the secondary battery having the above-described charging and discharging mechanism, there exist in the anode base material adhesive interfaces between graphite particles and adhesive interfaces between the graphite particles and the anode current collector. Then, when the secondary battery is charged, lithium metal is deposited on these adhesive interfaces. Then, when the adhesive strength of the adhesive interfaces is insufficient, the destruction of the adhesive interfaces is generated due to the deposition of lithium metal. As a result, the current collecting performance of the anode active materials is caused to be deteriorated. Then, the deterioration of the current collecting performance of the anode active materials promotes the increase of a polarization phenomenon upon charging and discharging reaction. Consequently, the chemical deterioration of a nonaqueous electrolyte material is induced on the surfaces of the cathode and the anode to deteriorate the charging and discharging cyclic characteristics of the battery. Therefore, it was understood that a series of phenomena from the destruction of the adhesive interfaces to the chemical degradation of the nonaqueous electrolyte material were main factors of the deterioration of the charging and discharging cyclic characteristics in the secondary battery.

Thus, according to the present invention, the characteristic deterioration mechanism is taken into consideration and a method for improving it is earnestly studied, so that the conductive fibers are included in the anode base materials to solve the-above described problems.

According to the present invention, the conductive fibers are included in the anode base materials, so that the deterioration of the current collecting capability of the entire body of the anode due to a separation phenomenon between the anode base materials or between the anode base materials and the anode current collector generated at the time of charging and discharging reactions is prevented and the chemical deterioration of the nonaqueous electrolyte material is avoided.

Specifically described, the conductive fibers are included in the anode base materials, for instance, the granulated graphite, and accordingly, the conductive fibers enter parts between graphite particles and parts between the graphite particles and the anode current collector to come into contact with the graphite particles and the anode current collector. Since these conductive fibers respectively serve to connect the graphite particles together and to connect the graphite particles to the anode current collector, the adhesive strength of the graphite particles and of the graphite particles and the anode current collector is reinforced. Therefore, even when the nonaqueous electrolyte secondary battery 1 is charged and lithium metal is deposited on the above-described adhesive interfaces, the separation phenomenon of the anode active materials from the current collector, that is, the damage on the adhesive interfaces can be prevented from occurring and the deterioration of the current collecting performance of the anode materials can be avoided. Consequently, the increase of the polarization phenomenon upon charging and discharging reactions due to the degradation of the current collecting performance of the anode materials can be prevented and the inductive generation of the chemical deterioration of the nonaqueous electrolyte material on the surfaces of the cathode and the anode can be prevented. Thus, the charging and discharging cyclic characteristics of the battery can be prevented from being deteriorated.

Further, since the conductive fibers can improve an electric conductivity between the graphite particles and between the graphite particles and the anode current collector, that is, the electric conductivity of the anode, due to the electric conductivity thereof, the anode material excellent in its charging and discharging capacity characteristics can be realized.

Therefore, the conductive fibers are included in the anode base materials, so that the anode base materials as the anode material are made excellent in their charging and discharging capacity characteristics. Additionally, the nonaqueous electrolyte secondary battery 1 can realize excellent charging and discharging cyclic characteristics.

Here, as the conductive fibers, materials having excellent electric conductivity are preferably selected in view of a function performed by the conductive fibers. Further, it is important for the conductive fibers to provide a high adhesive property to a binder material used for the anode. As specific materials from these standpoints, may be employed carbonaceous materials such as graphite, non-graphitizable carbon, graphitizable carbon, etc. manufactured by a generalized producing method, and metallic fibers such as copper, nickel, etc. produced by a melt spinning method.

Particularly, the carbonaceous materials are preferably suitable for the conductive fibers of the present invention, because the average diameter and length of fibers can be relatively finely thinned and many recessed and protruding parts or irregularities are expected to be generated on the surfaces of the fibers. Since fibrous graphite as a graphite material among the carbonaceous materials has a relatively high electric conductivity due to its high crystalline property and has a capability of doping and dedoping alkali metal ions or alkali earth metal ions, the loss of energy density due to the addition of the conductive fibers can be minimized as much as possible.

Since the conductive fibers need to be uniformly dispersed between the anode base materials, materials with the bulk density of 0.5 or lower are preferably used.

Further, the conductive fibers respectively preferably have the average diameter of fiber larger than 0.005 µm and smaller than 60 nm. When the conductive fibers respectively having the average diameter of fiber 0.005 µm or smaller are used, the electric resistance of the conductive fibers themselves is excessively increased, so that a satisfactory effect may not be possibly obtained when the battery characteristics are improved. On the contrary, when the conductive fibers respectively having the average diameter of fiber of 60 nm or larger are used, the diameter of each fiber of the conductive fibers is larger than the average particle diameter of an ordinary anode base material, so that the conductive fibers hardly enter spaces between the anode base materials and spaces between the anode base materials and the anode current collector. Therefore, when the battery characteristics are improved, a sufficient effect may not be possibly obtained.

Still further, the percentage content of the conductive fibers in the anode base materials is preferably 0.1 wt% or more and 45 wt% or less relative to the weight of the anode base materials. When the percentage content of the conductive fibers in the anode base materials is lower than 0.1 wt%, the absolute amount of the conductive fibers may be possibly insufficient and a satisfactory effect may not be got in improvement of the battery characteristics. On the other hand, when the percentage content of the conductive fibers in the anode base materials is more than 45 wt%, since the conductive fibers are bulky, the filling ratio of the anode active materials in the anode is lowered to decrease the energy density of the battery.

The separators 5 serve to isolate the cathode 3 from the anode 4 and pass lithium ions in electrolyte solution, while preventing the short-circuit of electric current due to the contact of both the electrodes.

As the materials of the separators, materials employed for conventional batteries may be used. A microporous film made of polyolefine excellent in its short-circuit prevention effect and capable of improving the safety of the battery due to a shut-down effect is most preferably employed among them.

The shut-down function of the separators 5 serves to close the holes of the separators 5 by the separators 5 having many micro holes which are melted when the temperature of the nonaqueous electrolyte secondary battery 1 rises owing to any factor, so that an electrode reaction is forcedly stopped. Accordingly, the separators 5 have the shut-down function so that the rise of temperature of the nonaqueous electrolyte secondary battery 1 can be suppressed even at the time of an abnormality. It has been known that the shut-down function of the separators is effective especially when the nonaqueous electrolyte secondary battery 1 is short-circuited by mistake.

The start temperature of such a shut-down, that is, the shut-down start temperature of the separators 5 preferably ranges from 100°C to 160°C. In case that the shut-down start temperature is lower than 100°C, when the nonaqueous electrolyte secondary battery is positioned in an environment of high temperature, for instance, left in a motor vehicle under the burning sun, the internal resistance of the battery is increased so that the deterioration of the battery performance may be possibly accelerated. On the contrary, when the shut-down start temperature exceeds 160°C, there is generated a delay in a closing phenomenon of the holes of the separators. Thus, it is feared that the shut-down characteristics insufficiently appear. Therefore, the shut-down start temperature is located within a range of 100°C or higher to 160°C or lower so that the shut-down characteristics of the separators 5 are extremely good.

The shut-down start temperature of the separators 5 more preferably ranges from 100°C to 142°C. Since the shut-down start temperature of the separators 5 is located within the above-described range, the closing phenomenon of the holes of the separators is rapidly started, hence the reliability of the nonaqueous electrolyte secondary battery is more ensured.

In order to locate the shut-down start temperature of the separators 5 within a range from 100°C or higher to 160°C or lower, the melting point of a material constituting the separators 5 needs to be located within the above-described range. Further, since the separators 5 are arranged between the electrodes, the material forming the separators 5 needs to be rich in its electrochemical stability.

As the material satisfying these demands, the above-described microporous film made of polyolefine can be preferably employed. Further, other polyolefine resins other than the above-described film can be preferably employed and polyethylene resins may be especially preferably employed. Further, a plurality of the copolymers made of polyethylene and polypropylene, the mixtures of polyethylene and polypropylene, and microporous films made of polyethylene and polypropylene may be laminated and the lamination may be employed. Still further, as the separators 5, any resin of the microporous films having an electrochemical stability may be used as well as the above-described resins.

The thickness of the separator 5 is preferably located within a range of 20 µm or more and 40 µm or less. When the thickness of the separator is smaller than 20 µm, the mechanical strength of the separator becomes insufficient so that the working yield of the battery may be disadvantageously possibly deteriorated. Conversely, when the thickness of the separator exceeds 40 µm, the ion permeability of the separator is deteriorated so that the output characteristics of the battery may be undesirably possibly deteriorated. Therefore, the thickness of the separator 5 is located within the above-described range so that the nonaqueous electrolyte secondary battery 1 has good battery characteristics while maintaining the working yield.

The separator 5 made of the microporous film made of polyolefine resin among the separators 5 as mentioned is obtained by, for instance, kneading liquid low volatile solvent in a molten state in a polyolefine component in a molten state to obtain the solution of homogeneous polyolefine component with high concentration, molding the obtained solution by a die to cool it and get a gel sheet and drawing the obtained sheet.

As the low volatile solvents, there may be employed low volatile aliphatic or cyclic hydrocarbons such as nonane, decane, decalin, p-xylene, undecane or liquid paraffin or the like. The mixed ratio of the polyolefine component and the low volatile solvent is determined in such a manner as described below. Assuming that the total of both the components is 100 wt%, the polyolefine component preferably includes 10 wt% or more and 80 wt% or less, and more preferably has 15 wt% or more and 70 wt% or less. When the amount of the polyolefine component is excessively low, the solution swells at the outlet of the die upon molding or a neck-in is large so that it is difficult to form the sheet. On the other hand, the amount of the polyolefine component is excessively high, it is difficult to prepare the uniform solution.

When the solution of polyolefine component with high concentration is molded by the die, in the case of a die for a sheet, a gap is preferably set to, for instance, 0.1 mm or larger and 5 mm or smaller. Further, extruding temperature is set to 140°C or higher and 250°C or lower and an extrusion rate is preferably set to 2 cm/minute or more and 30 cm/minute or less.

The solution of polyolefine component is cooled at least to gel temperature or lower. As a cooling method, there may be employed a method for allowing the solution to directly come into contact with cold air, cooling water or other cooling medium, or a method for allowing the solution to come into contact with a roll cooled by a refrigerant. The solution of polyolefine component with high concentration extruded from the die may be drawn at the drawing rate of 1 or higher and 10 or lower, preferably at the drawing rate of 1 or higher and 5 or lower before or during a cooling operation. At this time, when the drawing rate is too large, the neck-in inconveniently becomes large and the sheet is undesirably apt to be broken upon stretching it.

When the gel sheet is drawn stretched, for instance, the gel sheet is heated and stretched by a tenter method, a roll method, a rolling method or a method obtained by combining them with a prescribed magnification. The gel sheet is preferably drawn or stretched by a biaxial stretching method. At that time, either a longitudinal and horizontal simultaneous stretching method or a sequential stretching method may be carried out, and particularly, a simultaneous biaxial stretching method is preferably carried out.

Stretching temperature is desirably temperature obtained by adding 10°C to the melting point of the polyolefine component or lower, more preferably, crystal dispersion temperature or higher and lower than the melting point. When the stretching temperature is too high, the effective chain orientation by melting and stretching a resin cannot be undesirably realized. When the stretching temperature is too low, the resin is imperfectly softened, so that when the resin is drawn or stretched, a film is apt to be broken. Accordingly, the stretching operation of high magnification cannot be performed.

After the gel sheet is stretched, the stretched film is preferably cleaned by volatile solvent to remove remaining the low volatile solvent. After the stretched film is cleaned, the film is dried by heating or supplying air to volatilize the cleaning solvent. As the cleaning solvent, there are used volatile materials, for instance, hydrocarbons such as pentane, hexane, heptane, etc. chlorinated hydrocarbons such as methylene chloride, carbon tetrachloride, etc. fluorocarbon such as ethane trifluoride, or ethers such as diethyl ether, dioxane, etc. These cleaning solvents are selected in accordance with the low volatile solvent used for dissolving the polyolefine component and independently used or mixed to use the mixture. The stretched film can be cleaned by a method for immersing the film in the volatile solvent to extract it, a method for scattering the volatile solvent on the stretched film or a method having the combination of them. The film is continuously cleaned until the volatile solvent remaining in the stretched film reaches an amount less than 1 part by weight relative to the polyolefine component of 100 parts by weight. Then, the cleaning solvent is dried by a well-known method such as heating or supplying air.

The separators 5 made of the microporous film of the polyolefine resin can be obtained in accordance with the above-described processes.

Nonaqueous electrolyte solution is got by dissolving lithium salt as electrolyte salt in nonaqueous solvent. Here, the nonaqueous solvent indicates a nonaqueous compound whose intrinsic viscosity at 25 °C is 10.0 mPa·s or lower. The nonaqueous solvent preferably includes at least one of ethylene carbonate; EC and propylene carbonate; PC. Thus, the charging and discharging cyclic characteristics can be improved. Especially, when ethylene carbonate is mixed with propylene carbonate and the mixture is employed, the charging and discharging cyclic characteristics can be preferably more improved.

When graphite is used for the anode 4, the concentration of propylene carbonate in the nonaqueous solvent is preferably lower than 30wt%. Since propylene carbonate has a relatively high reactivity relative to graphite, when the concentration of propylene carbonate is too high, characteristics may be possibly deteriorated. When ethylene carbonate and propylene carbonate are included in the nonaqueous solvent, the mixed mass ratio ethylene carbonate to propylene carbonate (ethylene carbonate/propylene carbonate) in the nonaqueous solvent, that is, a value obtained by dividing the percentage content of ethylene carbonate by the percentage content of propylene carbonate is preferable 0.5 or larger.

The nonaqueous solvent preferably includes at least one kind of chain carbonates such as diethyl carbonate, dimethyl carbonate; DMC, ethyl methyl carbonate; EMC or methyl propyl carbonate, etc. Thus, the charging and discharging cyclic characteristics can be more improved.

The nonaqueous solvent further preferably includes at least one kind of 2, 4-difluoro anisole; DFA and vinylene carbonate; VC. The 2, 4-difluoro anisole can improve a discharging capacity. The vinylene carbonate can more improve the charging and discharging cyclic characteristics. Particularly, when they are mixed together and the mixture is employed, the discharging capacity and the charging and discharging cyclic characteristics can be more preferably improved at the same time.

The concentration of 2, 4-difluoro anisole in the nonaqueous solvent is preferably set to, for instance, 15 wt% or lower. When the concentration is too high, it is feared that the charging and discharging cyclic characteristics are imperfectly improved.

Further, the nonaqueous solvent may include any one kind or two kinds or more among materials obtained by replacing a part or all of hydrogen groups of butylene carbonate, γ-butyrolactone, γ-valerolactone and compounds of them by fluorine groups, 1, 2-dimethoxyethane, tetrahydrofuran, 2-methyl tetrahydrofuran, 1, 3-dioxolane, 4-methyl-1, 3-dioxolane, methyl acetate, methyl propionate, acetonitrile, glutaronitrile, adiponitrile, methoxy acetonitrile, 3-methoxy propionitrile, N, N-dimethyl formamide, N-methyl pyrrolidinone, N-methyl oxazolidinone, N, N-dimethyl imidazolidinone, nitromethane, nitroethane, sulfolane, dimethyl sulfoxide or trimethyl phosphate, etc.

As the lithium salt serving as electrolyte salt, are suitably employed, for example, LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiAlCl₄, LiSiF₆, LiCl or LiBr. One or two ore more kinds of them may be mixed together and the mixture may be utilized. Since LiPF₆ among them can get a high ionic conductivity and more improve the charging and discharging cyclic characteristics, it is preferable. Although the concentration of lithium salt relative to the nonaqueous solution is not specifically limited to a prescribed value, the concentration is preferably located within a range of 0.1 mol/l or more and 5.0 mol/l or lower, and more preferably located within a range of 0.5 mol/l or more and 2.0 mol/l or lower. The ionic conductivity of the electrolyte solution can be raised within the above-described range.

The nonaqueous secondary battery 1 having such a configuration operates as described below.

When the nonaqueous electrolyte secondary battery 1 is charged, lithium ions are dedoped from the cathode active materials included in the cathode composite mixture layer 3a, pass the separators 5 through the electrolyte solution and are initially doped to the anode base materials as the anode active materials capable of doping and dedoping lithium included in the anode composite mixture layer 4a. When the charging operation is further continued, a charging capacity exceeds the ability of charging capacity of the anode materials capable of doping and dedoping lithium under a state in which the open circuit voltage is lower than the overcharge voltage. Thus, lithium metal or lithium alloy begins to be deposited on the surfaces of the anode materials capable of doping and dedoping lithium. Specifically, at any point of a range from 0 V or higher to 4.2 V or lower as the open circuit voltage depending on materials of the electrode, the lithium metal or the lithium alloy begins to be deposited on the surfaces of the anode materials capable of doping and dedoping lithium. After that, the lithium metal is continuously deposited on the anode 4 until the charging capacity reaches a previously designed charging capacity as the open circuit voltage, for instance, the open circuit voltage reaches 4.2 V. Thus, when, for instance, the carbon materials as the anode materials capable of doping and dedoping lithium are employed, the external appearance of the anode composite mixture layer 4a changes its color from black to gold and further changes the color from gold to silver due to the deposition of the lithium metal or the lithium alloy.

Then, when a discharging operation is carried out, the lithium metal or the lithium alloy deposited on the anode 4 is dissolved in ions and the ions pass the separators 5 through the electrolyte solution and are doped in the cathode active materials contained in the cathode.composite mixture layer 3a. When the discharging operation is further continued, ionic lithium doped to the anode materials capable of doping and dedoping lithium in the anode composite mixture layer 4a is dedoped therefrom and doped to the cathode active materials.

Here, the overcharge voltage means open circuit voltage when the battery is brought into an overcharged state. Specifically, the overcharge voltage indicates voltage higher than the open circuit voltage of a "completely charged" battery as defined and described, for instance, on page 6 of "Guideline of Standard for Safety Evaluation of Lithium Secondary Battery (SBA G1101) which is one of guides determined by the Japan Storage Battery Industries Inc (Battery Association of Japan Inc). In other words, the overcharge voltage designates voltage higher than the open circuit voltage after the battery is charged by using a charging method employed when the nominal capacity of each battery is obtained, a standard charging method or a recommended charging method. Specifically, this nonaqueous electrolyte secondary battery 1 is completely charged when, for instance, the open circuit voltage is 4.2 V and the lithium metal is deposited on the surfaces of the anode materials capable of doping and dedoping lithium in a part of the range in which the open circuit voltage is 0 V or higher and 4.2 V or lower.

Therefore, when the anode 4, more specifically, the anode materials capable of doping and dedoping lithium are measured by, for instance, a multinuclear nuclear magnetic resonance spectroscopy under the completely charged state, a peak belonging to the lithium ions and a peak belonging to the lithium metal are acquired. On the other hand, under a completely discharged state, the peak belonging to the lithium ions is obtained, however, the peak belonging to the lithium metal disappears. The completely discharged state corresponds to a state in which materials (the lithium ions in the present embodiment) for an electrode reaction are not supplied from the anode 4 to the cathode 3. For instance, in the nonaqueous electrolyte secondary battery 1 according to the present embodiment or the lithium-ion secondary battery, when closed circuit voltage reaches 2.75 V, the battery can be considered to be "completely discharged".

In the well-known lithium-ion secondary battery, the charging and discharging reactions of its anode are described only by the electrochemical doping and dedoping reactions of lithium ions to/from carbon materials. Further, in the well-known lithium metal secondary battery, its anode reaction is described only by the electrochemical deposition and dissolution reactions of lithium metal or lithium alloy on a current collector such as a copper plate. That is, when the reaction patterns of these anodes are compared with each other, the nonaqueous electrolyte secondary battery 1 of the present invention has an operation principle apparently different from those of the existing lithium-ion secondary battery and lithium metal secondary battery. Accordingly, the originality of the nonaqueous electrolyte secondary battery 1 can be understood.

In the nonaqueous electrolyte secondary battery 1, since lithium is doped to the anode materials capable of doping and dedoping lithium in the beginning of charging and lithium metal is deposited on the surfaces of the anode materials capable of doping and dedoping lithium during a charging operation in which the open circuit voltage is lower than the overcharge voltage, both the characteristics of the conventional so-called lithium metal secondary battery and lithium-ion secondary battery can be obtained. That is, the high energy density can be obtained and the charging and discharging cyclic characteristics and rapid charging characteristics can be improved.

Further, according to the nonaqueous electrolyte secondary battery 1, since the conductive fibers are included in the anode base materials, the deterioration of the current collecting characteristics of the entire body of the anode due to the separation phenomenon between the anode base materials and between the anode base materials and the anode current collector is prevented and the chemical deterioration of the nonaqueous electrolyte materials is prevented. As a result, since the increase of a polarization phenomenon upon charging and discharging reactions resulting from the degradation of the current collecting performance of the anode materials can be prevented and the chemical degradation of the nonaqueous electrolyte materials can be prevented from inductively generated on the surfaces of the cathode and the anode, the deterioration of the charging and discharging cyclic characteristics of the battery is avoided and desired charging and discharging cyclic characteristics are realized.

In the above-described embodiment, although an example that the nonaqueous electrolyte solution in which the electrolyte salt as the nonaqueous electrolyte is dissolved is used is explained, it is to be understood that the present invention is not limited thereto and the present invention may be applied to a case that nonaqueous electrolyte materials are employed, which are obtained by mixing the nonaqueous electrolyte solution with, as the nonaqueous electrolyte, a gel electrolyte including electrolyte salt, swelling solvent and matrix polymers, solid polymer electrolyte obtained by combining ionic conductive polymers with electrolyte salt, and inorganic solid electrolyte having ionic conductive and inorganic ceramics, glass, ionic crystals and so on as main components.

For instance, in case that the gel electrolyte is used as the nonaqueous electrolyte, when the ionic conductivity of the gel electrolyte is 1 mS/cm or higher, any composition of the gel electrolyte and any structure of the matrix polymers constituting the gel electrolyte may be utilized.

As the specific matrix polymers, there may be employed polyacrylonitrile, polyvinylidene fluoride, copolymers of polyvinylidene fluoride and polyhexafluoro propylene, polytetrafluoro ethylene, polyhexafluoro propylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, polycarbonate, etc. Especially, when an electrochemical stability is taken into consideration, polyacrylonitrile, polyvinylidene fluoride, polyhexafluoro propylene, polyethylene oxide or the like are preferably employed.

Since the weight of the matrix polymer required for producing the gel electrolyte is different depending on the compatibility of the matrix polymer with the nonaqueous electrolyte solution, it difficult to simple-mindedly specify the weight. The weight of the matrix polymer is preferably 5 wt% to 50 wt% relative to the nonaqueous electrolyte solution.

In the above-described embodiment, although an example that lithium salt is used as the electrolyte salt is described, it is to be understood that the present invention is not limited to the above example, and compounds dedoping desired light metal ions, that is, alkali metal ions or alkali earth metal ions when dissolved in the nonaqueous solvent may be employed as the electrolyte salt.

In the above-described embodiment, although an example that lithium is used as the light metal is described, it is to be recognized that the present invention is not limited thereto and alkali metal and alkali earth metal may be preferably employed as the light metal. Specifically, there may be exemplified lithium (Li), sodium (Na), potassium (K), magnesium (Mg), calcium (Ca) and alloys including them. From the viewpoint of ensuring the compatibility with the existing lithium-ion secondary battery, the lithium or the alloys including lithium is desirably used as the light metal.

Here, as species for the electrode reaction in the present invention, the alkali metal ions or the alkali earth metal ions are employed as mentioned above. Specifically, Li ions, Na ions, K ions, Mg ions and Ca ions are desirably utilized. Especially, since the Li ions among them have the high voltage compatibility with the lithium-ion secondary battery which has been already put to practical use, they are most suitable for the species for the electrode reaction.

Further, as the above-described alkali metal or the alkali earth metal, Li, Na, K, Mg, Ca and the alloys including them can be utilized. From the viewpoint of the voltage compatibility as described above, Li or the alloys including Li are most conveniently employed. Here, as the alloys including Li, that is, as elements which can form alloys in association with Li, there are enumerated aluminum (Al), zinc (Zn), lead (Pb), tin (Sn), bismuth (Bi), cadmium (Cd), etc.

In the above-described embodiment, although the cylindrical nonaqueous electrolyte secondary battery is explained as an example, it is to be understood that the present invention is not limited thereto, and the present invention may be applied to nonaqueous electrolyte secondary batteries with various kinds of configurations such as a cylindrical type, a prismatic type, a button type, etc.

The nonaqueous electrolyte secondary battery 1 can be manufactured in such a manner as described below.

Firstly, for instance, manganese-containing oxide is mixed with nickel-containing oxide, and a conductive agent and a binding agent are mixed therewith as required to prepare a cathode composite mixture. This cathode composite mixture is dispersed in a solvent such as N-methyl-2-pyrrolidone to have paste type cathode composite mixture slurry. This cathode composite mixture slurry is applied to a cathode current collector layer to dry the solvent. Then, the cathode composite mixture is compression-molded by a roller press machine to form a cathode composite mixture layer and a cathode 3 is manufactured.

Then, for instance, an anode material is mixed with a binding agent as necessary to prepare an anode composite mixture. This anode composite mixture is dispersed in a solvent such as N-methyl-2-pyrrolidone to obtain paste type anode composite mixture slurry. This anode composite mixture slurry is applied to an anode current collector layer to dry the solvent. Then, the anode composite mixture is compression-molded by a roller press machine to form an anode composite mixture layer and an anode 4 are manufactured.

Subsequently, a cathode lead 13 is attached to the cathode current collector layer by welding or the like. An anode lead 14 is attached to the anode current collector layer by welding or the like. Then, the cathode 3 and the anode 4 are coiled through separators 5. The end part of the cathode lead 13 is welded to a safety valve mechanism 9. The end part of the anode lead 14 is welded to a battery can 2. The spirally coiled cathode 3 and anode 4 are sandwiched in between a pair of insulating plates 6 and 7 and accommodated in the battery can 2. After the cathode 3 and the anode 4 are accommodated in the battery can 2, nonaqueous electrolyte solution is injected to the battery can 2 to impregnate the separators 5 therewith.

After that, a battery cover 8, the safety valve mechanism 9 and a PTC (positive temperature coefficient) element 10 are fixed to the opening end part of the battery can 2 by caulking a gasket 11. Thus, the nonaqueous electrolyte secondary battery shown in Fig. 1 is formed.

### Examples

Now, the present invention will be described in accordance with specific experimental results. It is to be recognized that the present invention is not limited to below described Examples.

### Experiment 1

In an Experiment 1, an evaluating coin cell was manufactured to evaluate the characteristics of an anode. The evaluating coin type cell manufactured in this experiment is employed so that the characteristics only of the anode can be properly evaluated.

### 1. Manufacture of Evaluating Coin Cell

The evaluating coin cell was manufactured as described below.

### Example 1

In the Example 1, granulated graphite having the average particle diameter of 25 µm was mixed with fibrous graphite having the average diameter of fiber of 0.5 µm and the average length of fiber of 30 µm to obtain an anode base material. The anode base material was used to manufacture an anode. Specifically, the granulated graphite powder of 85 wt%, the fibrous graphite of 5 wt% and polyvinylidene fluoride (refer it to as PVDF, hereinafter) of 10 wt% were firstly mixed together to prepare an anode composite mixture. The anode composite mixture thus obtained was dispersed in 1-methyl-2-pyrrolidone as a solvent to have slurry.

Then, an elongated copper foil having the thickness of 10 µm was prepared as an anode current collector. The slurry type anode composite mixture was uniformly applied to a single surface of the anode current collector and dried to manufacture an electrode plate. Then, this electrode plate was heated and pressed at suitable temperature to manufacture an elongated anode having the total thickness of 60 µm. Further, the elongated anode was cut into circular members respectively having the diameter of 15 mm to manufacture an anode 22 for an evaluating coin type cell.

Nonaqueous electrolyte solution was prepared in such a manner that LiPF₆ was dissolved in solvent including ethylene carbonate and diethyl carbonate mixed in the volumetric ratio 1 : 1 so that the weight molarity of LiPF₆ was 1.5 mol/kg.

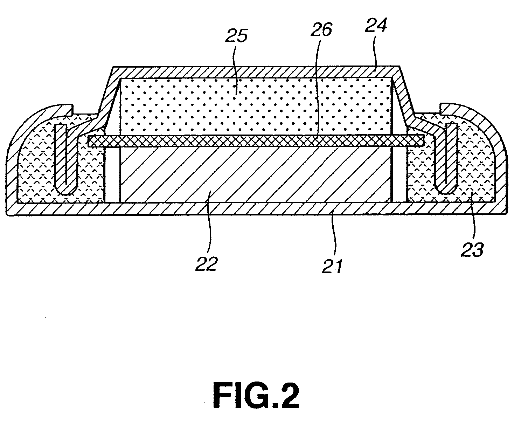

Then, the anode 22 and the nonaqueous electrolyte solution produced as described above were used to manufacture an evaluating coin type cell having the diameter of 20 mm and the height of 2.5 mm as shown in Fig. 2. In Fig. 2, an anode can 21 is a can case serving as an anode terminal produced by drawing a stainless steel sheet. To the anode can 21, the anode 22 is welded. A cathode can 24 is formed by applying a drawing work to the stainless steel sheet. A cathode 25 having a charging and discharging capacity more excessive than that of the anode 22 and made of a lithium metal plate is pressed and attached to the anode can. As a separator 26, a porous film made of polyethylene having the thickness of 25 µm and porosity of 35 % was used. Here, the porosity means the rate of volume of spaces included in the porous material relative to all the volume of the porous material. A sealing gasket 23 is made of a polypropylene resin and provided between the anode can 21 and the cathode can 24 to prevent an electrical short-circuit and also functions as a sealing material when the anode can 21 is caulked. In the coin type cell, is contained the nonaqueous electrolyte solution having an amount necessary for impregnating the anode 23 and the separator 26 therewith.

### Example 2

In the Example 2, an anode was manufactured and an evaluating coin type cell was produced in the same manner as that of the Example 1 except that an anode composite mixture was prepared by mixing granulated graphite powder of 60 wt%, fibrous graphite of 30 wt% and PVDF of 10 wt% together.

### Example 3

In the Example 3, an anode was manufactured and an evaluating coin type cell was produced in the same manner as that of the Example 1 except that an anode composite mixture was prepared by mixing granulated graphite powder of 89.9 wt%, fibrous graphite of 0.1 wt% and PVDF of 10 wt% together.

### Example 4

In the Example 4, an anode was manufactured and an evaluating coin type cell was produced in the same manner as that of the Example 1 except that granulated graphite having the average particle diameter of 25 µm was mixed with fibrous graphite having the average diameter of fiber of 0.1 µm and the average length of fiber of 30 µm to obtain an anode base material, and the anode base material was used to prepare an anode composite mixture by mixing the granulated graphite power of 85 wt%, the fibrous graphite of 5 wt% and PVDF of 10 wt% together.

### Example 5

In the Example 5, an anode was manufactured and an evaluating coin type cell was produced in the same manner as that of the Example 1 except that granulated graphite having the average particle diameter of 25 µm was mixed with fibrous graphite having the average diameter of fiber of 50 µm and the average length of fiber of 30 µm to obtain an anode base material, and the anode base material was used to prepare an anode composite mixture.

### Example 6

In the Example 6, an anode was manufactured and an evaluating coin type cell was produced in the same manner as that of the Example 1 except that granulated graphite having the average particle diameter of 25 µm was mixed with fibrous graphite having the average diameter of fiber of 10 µm and the average length of fiber of 60 µm to obtain an anode base material, and the anode base material was used to prepare an anode composite mixture by mixing the granulated graphite power of 45 wt%, the fibrous graphite of 45 wt% and PVDF of 10 wt% together.

### Example 7

In the Example 7, an anode was manufactured and an evaluating coin type cell was produced in the same manner as that of the Example 1 except that granulated graphite having the average particle diameter of 25 µm was mixed with fibrous graphite having the average diameter of fiber of 3 µm and the average length of fiber of 50 µm to obtain an anode base material, and the anode base material was used to prepare an anode composite mixture by mixing the granulated graphite powder of 70 wt%, the fibrous graphite of 20 wt% and PVDF of 10 wt% together.

### Comparative Example 1

In the Comparative Example 1, an anode was manufactured and an evaluating coin type cell was produced in the same manner as that of the Example 1 except that only granulated graphite having the average particle diameter of 25 µm was used to obtain an anode base material, and the anode base material was used to prepare an anode composite mixture by mixing the granulated graphite powder of 90 wt% with PVDF of 10 wt%.

### Comparative Example 2

In the Comparative Example 2, an anode was manufactured and an evaluating coin type cell was produced in the same manner as that of the Example 1 except that granulated graphite having the average particle diameter of 25 µm was mixed with fibrous graphite having the average diameter of fiber of 60 µm and the average length of fiber of 30 µm to obtain an anode base material, and the anode base material was used to prepare an anode composite mixture.

### Comparative Example 3

In the Comparative Example 3, an anode was manufactured and an evaluating coin type cell was produced in the same manner as that of the Example 1 except that granulated graphite having the average particle diameter of 25 µm was mixed with fibrous graphite having the average diameter of fiber of 0.005 µm and the average length of fiber of 30 µm to obtain an anode base material, and the anode base material was used to prepare an anode composite mixture.

### 2. Evaluation of Characteristics

A charging and discharging test was carried out in the coin type cells of the Examples 1 to 7 and the Comparative Examples 1 to 3 manufactured as described above to evaluate the characteristics of the anode.

### [Evaluation of Charging and Discharging Cyclic Characteristics]

An doping reaction of lithium ions to the anode, that is, a charging operation was carried out by a constant-current method. Specifically, the charging operation was carried out until the charging capacity of the anode reached 850 mAh/cm³ after the charging operation of 1 mA was started. Similarly, the dedoping reaction of lithium ions, that is, a discharging operation was carried out by a constant current system. Specifically, the discharging operation was performed until terminal voltage reached to 1.5 V relative to Li after the discharging operation of 1 mA was started. The above described processes were considered to be one cycle and the charging and discharging operations of 30 cycles were repeated. Then, a charging and discharging capacity ratio (%) was obtained for each cycle. The charging and discharging ratio (%) was obtained by calculating the percentage of the discharging capacity relative to the charging capacity.

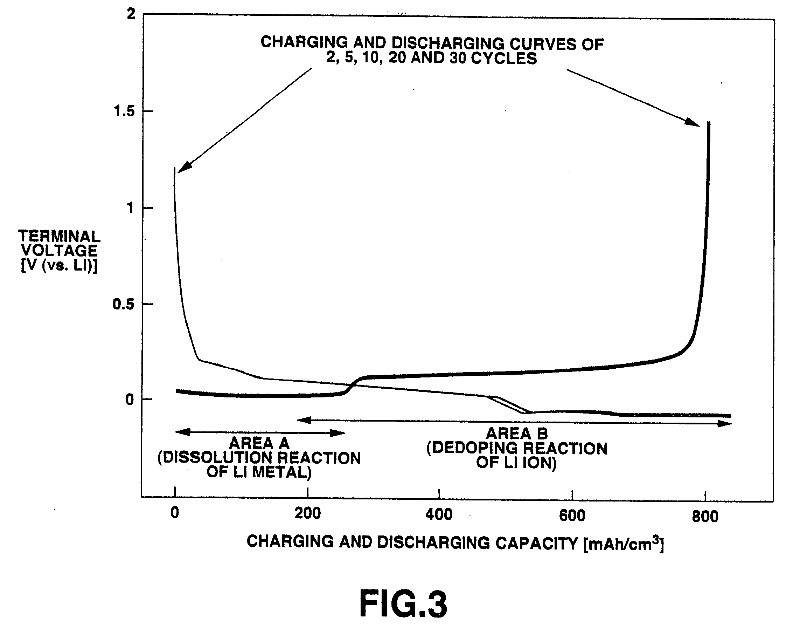

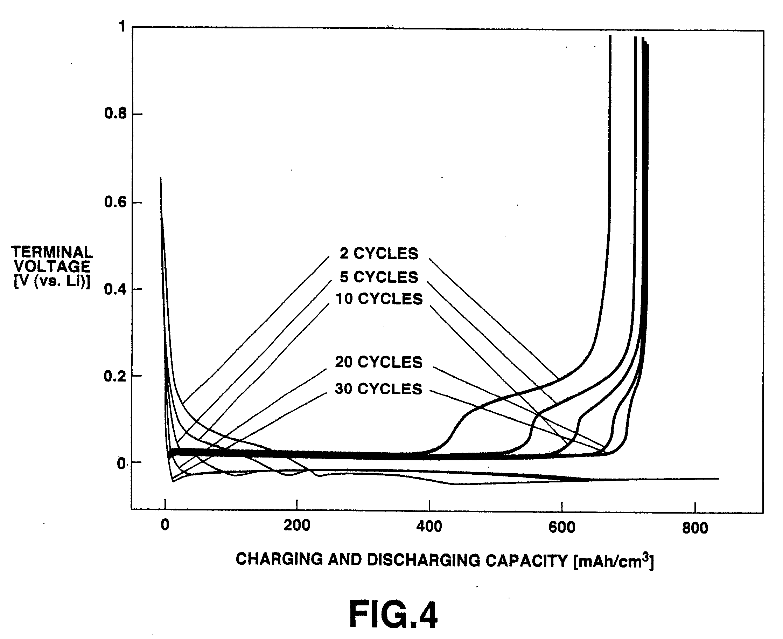

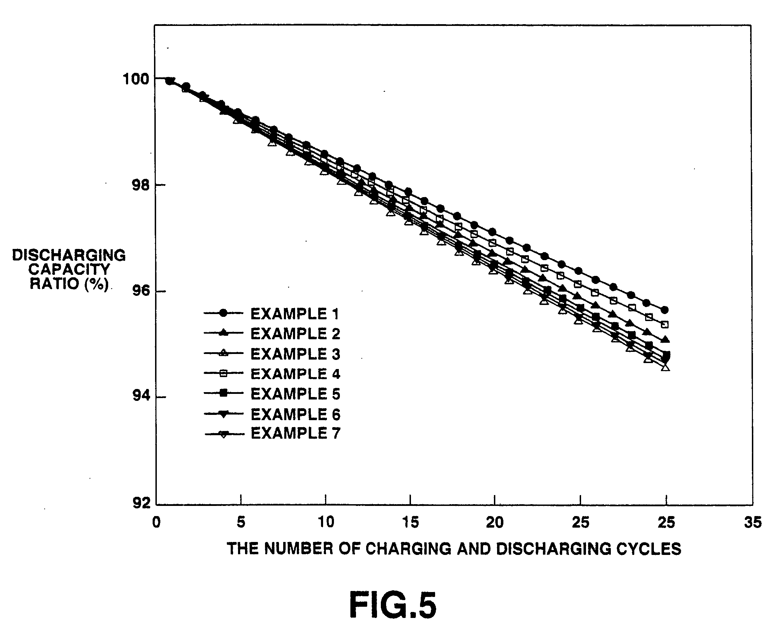

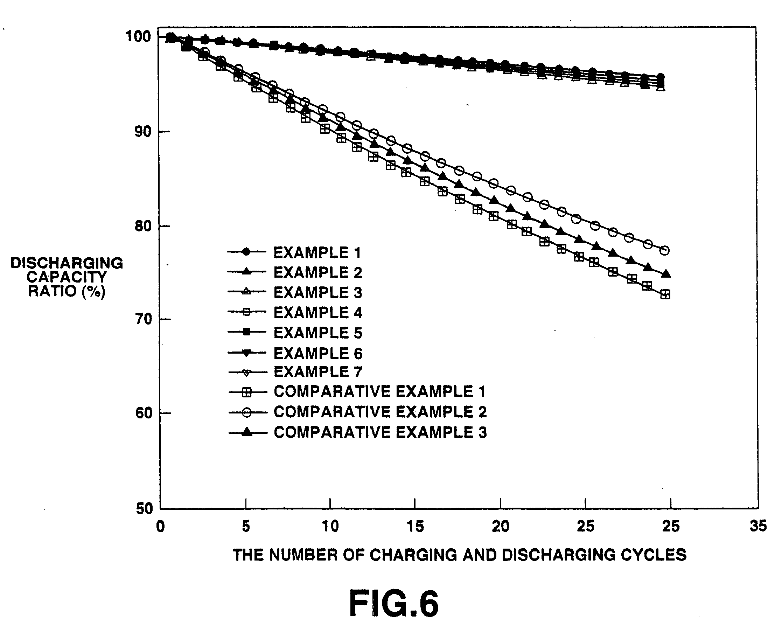

Fig. 3 shows charging and discharging curves of 2 cycles, 5 cycles, 10 cycles, 20 cycles and 30 cycles of the Example 1. Similarly, Fig. 4 shows charging and discharging curves of 2 cycles, 5 cycles, 10 cycles, 20 cycles and 30 cycles. Further, Figs. 5 and 6 show the relation of the ratio of a discharging capacity relative to a charging capacity, that is, the charging and discharging ratio and the number of charging and discharging cycles in the Examples 1 to 7 and the Comparative Examples 1 to 3. The discharging capacity ratio indicates the rate of the discharging capacity relative to the charging capacity in each cycle expressed by percentage. Table 1 shows the charging and discharging capacity ratio (%) during a first time in the Examples 1 to 7 and the Comparative Examples 1 to 3.

**[Table 1]**

| | Anode Active Material | | |
|---|---|---|---|
| | Granulated Graphite | Fibrous Graphite | |
| | Average Particle Diameter (µm) | Average Diameter (µm) | Average Length of Fiber (µm) |
| Example 1 | 25 | 0.5 | 30 |
| Example 2 | 25 | 0.5 | 30 |
| Example 3 | 25 | 0.5 | 30 |
| Example 4 | 25 | 0.1 | 30 |
| Example 5 | 25 | 50 | 30 |
| Example 6 | 25 | 10 | 60 |
| Example 7 | 25 | 3 | 50 |
| Comparative Example 1 | 25 | ― | ― |
| Comparative Example 2 | 25 | 60 | 30 |
| Comparative Example 3 | 25 | 0.005 | 30 |

| | Composition of Anode Composite Mixture | | | Discharging and Capacity Ratio (%) |
|---|---|---|---|---|
| | Granulated Graphite (wt%) | Fibrous Graphite (wt%) | PVDF (wt%) | |
| Example 1 | 85 | 5 | 10 | 96.1 |
| Example 2 | 60 | 30 | 10 | 94.5 |
| Example 3 | 89.9 | 0.1 | 10.0 | 95.3 |
| Example 4 | 85 | 5 | 10 | 93.8 |
| Example 5 | 85 | 5 | 10 | 94.2 |
| Example 6 | 45 | 45 | 10 | 93.1 |
| Example 7 | 70 | 20 | 10 | 92.9 |
| Comparative Example 1 | 90 | ― | 10 | 85.2 |
| Comparative Example 2 | 85 | 5 | 10 | 86.1 |
| Comparative Example 3 | 85 | 5 | 10 | 85.4 |

Firstly, in the Example 1, it was recognized that an area A of a charging curve and an area B of a discharging curve respectively corresponded to a "deposition and dissolution reaction of lithium metal on granulated graphite and fibrous graphite" and to an "doping and dedoping reaction of lithium ions to/from granulated graphite and fibrous graphite" shown in Fig. 3, and the charging and discharging reactions of the anode were expressed by the sum of them.

As apparent from Fig. 3, in the Example 1, a polarization phenomenon in the charging and discharging curves was not apt to be increased after the 30 cycles. Further, as apparent from Figs. 5 and 6, the deterioration of the charging and discharging capacity after the 30 cycles was low. Accordingly, it was recognized that the charging and discharging capacity was hardly dependent upon the cycles. Still further, as shown in the Table 1, in the Example 1, it was understood that the charging and discharging ratio during the first cycle was 92 % or more.

It was proved from these results, that the anode of the evaluating coin cell of the Example 1 had high capacity characteristics more excellent than those of the anode used in the existing lithium-ion secondary battery and excellent charging and discharging cyclic characteristics.

Further, as apparent from Figs. 5 and 6 for the Examples 2 to 7, it was recognized that the decrease in the ratio of the discharging capacity relative to the charging capacity, that is, the charging and discharging capacity ratio was small even after the 30 cycles, and accordingly, the charging and discharging capacity ratio was hardly dependent upon the cycles. Still further, as shown in the Table 1, it was recognized that the charging and discharging capacity ratio during the first cycle was 92 % or more in all of the Examples 2 to 7.

Thus, it was proved from these experimental results, that the anodes of the evaluating coin cells in the Examples 2 to 7 had high capacity characteristics more excellent than those of the anode employed in the existing lithium-ion secondary battery and excellent charging and discharging cyclic characteristics.

On the other hand, in the Comparative Example 1, it was recognized, from Fig. 4, that a polarization phenomenon was liable to be obviously increased in charging and discharging curves while charging and discharging cycles are repeated till 30 cycles. From this fact, it may be guessed that the progress of an electrode reaction is checked in the Comparative Example 1. Still further, as apparent from Fig. 6, it was recognized the decrease in the ratio of the discharging capacity relative to the charging capacity, that is, the charging and discharging capacity ratio was large even after the 30 cycles, and accordingly, the charging and discharging capacity ratio was greatly dependent upon the cycles. Additionally, as shown in the Table 1, it was recognized that the charging and discharging ratio during the first cycle was lower than 90 %.

When these experimental results were compared with those of the Examples 1 to 7, it was recognized that the fibrous conductive materials were added as the anode base materials to effectively improve the battery characteristics.

Further, it was proved from the Examples 1 to 7, that the fibrous conductive materials of 0.1 wt% to 45 wt% were added as the anode base materials to effectively improve the battery characteristics.

In the Comparative Example 2, it was understood from Fig. 6 that the charging and discharging capacity ratio in the anode was greatly dependent on the cycles. Further, from the Table 1, it was recognized that the charging and discharging capacity ratio during the first was lower than 90 %. When these experimental results were especially compared with those of the Example 1, it was understood that, when the conductive fibers having the average length of fiber of 60 µm were mixed as the anode base materials, the improvement effect of the battery characteristics was hardly obtained.

Further, in the Comparative Example 3, it was recognized from Fig.6 that the charging and discharging capacity ratio in the anode was extremely dependent on the cycles. It was also recognized from the Table 1, that the charging and discharging capacity ratio during the first cycle was lower than 90 %. When these experimental results were compared particularly with those of the Example 1, it was understood that, when the conductive fibers having the average diameter of fiber of 0.005 µm were mixed as the anode base materials, the improvement effect of the battery characteristics was hardly obtained.

As apparent from the above description, the conductive fibers having the average diameter of fiber larger than 0.005 µm and smaller than 60 µm were mixed as the anode base materials so that the battery characteristics could be effectively obtained.

### Experiment 2

In an experiment 2, a cylindrical nonaqueous electrolyte secondary battery using an anode similar to that of the Experiment 1 was manufactured and battery characteristics were evaluated.

### 1. Manufacture of Cylindrical Nonaqueous Electrolyte Secondary Battery

A cylindrical nonaqueous secondary battery was manufactured as described below.

### Example 8

In the Example 8, the cylindrical nonaqueous electrolyte secondary battery was manufactured by using the anode obtained in the Example 1.

Firstly, the anode was manufactured. Specifically, as an anode current collector 4b, an elongated copper foil having the thickness of 10 µm was prepared. The slurry type anode composite mixture produced in the Example 1 was uniformly applied on both the surfaces of the anode current collector 4b, and then, solvent was completely removed by heating to obtain an electrode plate.

Then, the electrode plate was heated, pressed and molded under a suitable temperature condition to manufacture an elongated anode 4 having the total thickness of 90 µm.

Subsequently, a cathode was manufactured. Specifically, lithium carbonate of 0.5 mol was mixed with cobalt carbonate of 1 mol. The mixture thus obtained was sintered in air for 5 hours at the temperature of 900°C. When the X-ray diffraction measurement of the obtained material was carried out, the material had a peak completely corresponding to the peak of LiCoO₂ registered in the JCPDS file. Thus, the material was recognized as LiCoO₂.

The LiCoO₂ was pulverized to obtain LiCoO₂ powder having the particle diameter with an accumulation of 50% obtained by a laser diffraction method.

The obtained LiCoO₂ powder of 95 wt% was mixed with lithium carbonate powder of 5 wt% to obtain a mixture. The mixture of 94 wt%, amorphous carbon powder (Ketjen Black) of 3 wt% as a conductive agent and PVDF of 3 wt% as a binding agent were mixed together and prepared. The obtained mixture was dispersed in 1-methyl-2-pyrrolidone to produce a paste type cathode composite mixture.

Further, an elongated aluminum foil having the thickness of 20 µm was prepared as a cathode current collector 3b. The cathode composite mixture as described above was uniformly applied on both the surfaces of the cathode current collector 3b, dried, and then compression-molded to manufacture an elongated cathode 3 having the total thickness of 180 µm.

The elongated anode 4 and the elongated cathode 3 manufactured as described above were laminated through separators made of microporous polyethylene stretched film having the thickness of 30 µm, stacked the elongated anode 4, the separator 5, the elongated cathode 3, and the separator 5 respectively, and the laminated body was spirally coiled many times. Thus, a jelly roll type spirally coiled electrode body having the outside diameter of 14 mm was manufactured.

Then, a pair of insulating plates were provided perpendicul arly to the peripheral surface of the spirally coiled electrode body so as to sandwich the electrode body in between the insulating plates. In order to collect the electric current of the cathode 3, one end of a cathode lead 13 made of aluminum was drawn from the cathode current collector 3b and the other end was electrically connected to a battery cover 8 through a safety valve mechanism 9 for cutting off the electric current depending on the internal pressure of a battery. Further, in order to collect the electric current of the anode 4, one end of an anode lead 14 made of nickel was drawn from the anode current collector 4b and the other end was welded to a battery can 2.

Then, nonaqueous electrolyte solution of 3.0 g was injected to the battery can 2. The nonaqueous electrolyte solution was employed, in which LiPF₆ was dissolved in nonaqueous solvent prepared by mixing ethylene carbonate of 20 wt%, dimethyl carbonate of 50 wt%, ethyl methyl carbonate of 10 wt%, and propylene carbonate of 20 wt% together so that the weight molarity of LiPF₆ was 1.5 mol/kg. The nonaqueous electrolyte solution was injected by a pressure reducing system.

Finally, the battery can 2 was caulked through an insulating and sealing gasket 11 to which asphalt was applied so that a safety valve mechanism 9 having a current cutting off mechanism, a PTC element 10 and the battery cover 8 to seal the battery. Thus, the cylindrical nonaqueous electrolyte secondary battery having the diameter of 14 mm and the height of 65 mm was manufactured.

### Example 9

In the Example 9, a cylindrical nonaqueous electrolyte secondary battery was manufactured in the same manner as that of the Example 8 by using the anode manufactured in the Example 6.

### Example 10

In the Example 10, a cylindrical nonaqueous electrolyte secondary battery was manufactured in the same manner as that of the Example 8 by using the anode manufactured in the Example 7.

### Example 11

In the Example 11, a cylindrical nonaqueous secondary battery was manufactured in the same manner as that of the Example 8 except that, when anode base materials obtained by mixing granulated graphite having the average diameter of 25 µm with fibrous graphite having the average diameter of fiber of 0.5 µm and the average length of fiber of 30 µm was used to prepare an anode composite mixture, granulated graphite powder of 50 wt%, the fibrous graphite of 45 wt% and PVDF of 5 wt% were mixed together.

### Comparative Example 4

In the Comparative Example 4, the anode manufactured in the Comparative Example 1 was used to manufacture a cylindrical nonaqueous electrolyte secondary battery in the same manner as that of the Example 8.

### Comparative Example 5

In the Comparative Example 5, the anode manufactured in the Comparative Example 3 was used to manufacture a cylindrical nonaqueous electrolyte secondary battery in a similar manner to that of the Example 8.

### Comparative Example 6

In the comparative Example 6, an anode was manufactured in the same manner as that of the Comparative Example 1 except that the total thickness of the elongated anode 4 was 172 µm and the total thickness of the elongated cathode 3 was 152 µm. Further, a cylindrical nonaqueous electrolyte secondary battery was manufactured in the same manner as that of the Example 8. The total thickness of the electrodes was set as described above, so that the charging and discharging reactions of the anode include only the doping and dedoping reactions of lithium ions to/from the graphite anode. Thus, the cylindrical nonaqueous electrolyte secondary battery of the Comparative Example 6 is considered to be a lithium-ion secondary battery.

### 2. Evaluation of Characteristics

Charging and discharging tests were carried out to the cylindrical nonaqueous electrolyte secondary batteries of the Examples 8 to 11 and the Comparative Examples 4 to 6 manufactured as described above to evaluate battery characteristics as mentioned below.

### [Evaluation of Charging and Discharging Cyclic Characteristics]

A charging operation was performed in accordance with a constant-current and constant-voltage system. More specifically, after a charging operation of constant-current of 300 mA was started, the constant-current charging operation was changed to a constant-voltage charging operation when voltage between terminals was increased to 4.2 V. Then, with the lapse of 5 hours after the charging operation was started, the charging operation was finished. The voltage between the terminals of the cylindrical nonaqueous electrolyte secondary battery immediately before the charging operation was completed was 4.2 V and a current value was 5 mA or lower. In this specification, such a state is defined as a completely charged state.

Further, a discharging operation was carried out by a constant-current system. More specifically, the discharging operation of constant current of 300 mA was started and the discharging operation was carried out until voltage between terminals is lowered to 2.75 V. In this specification, such a state is defined as a completely discharged state.

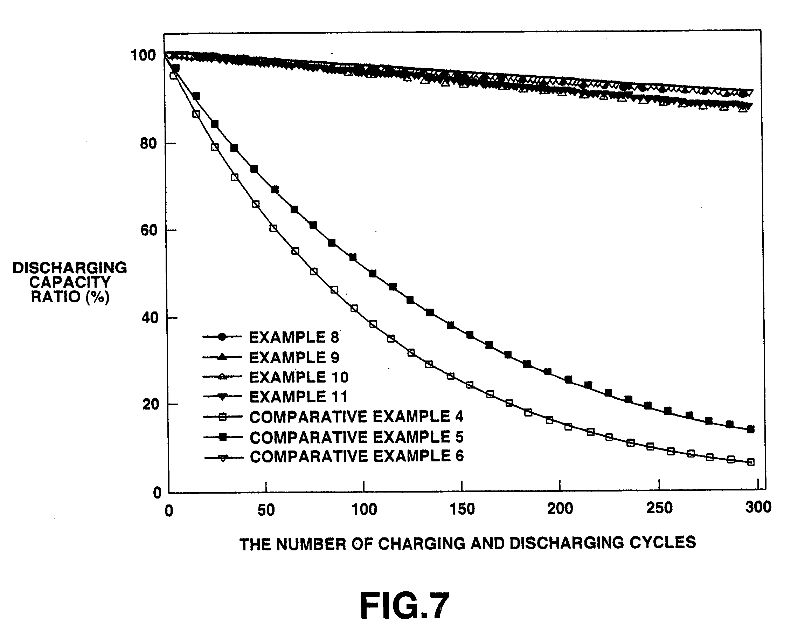

The above described processes are considered to be one cycle. The charging and discharging cycles were repeated 300 times. Then, a charging and discharging capacity ratio (%) was obtained for each cycle. Then, the charging and discharging capacity ratio (%) was obtained by calculating the percentage of a discharging capacity ratio (%) relative to a charging capacity. The results thus obtained are shown in Fig. 7.

Further, the discharging capacity of a second cycle is determined to be the discharging capacity of the cylindrical nonaqueous electrolyte secondary battery. Then, the energy density of the battery was obtained on the basis of the values. The results thus obtained are shown in the Table 2.

**[Table 2]**

| | Energy Density (wh/l) | Discharging Capacity Ratio (%) |
|---|---|---|
| Example 8 | 425 | 86 |
| Example 9 | 408 | 94 |
| Example 10 | 415 | 91 |
| Example 11 | 346 | 88.7 |
| Comparative Example 4 | 386 | 6.7 |
| Comparative Example 5 | 390 | 14.2 |
| Comparative Example 6 | 301 | 91.7 |

Further, the charging and discharging cyclic characteristics were compared and evaluated in accordance with the discharging capacity ratio. The discharging capacity ratio was got by calculating the percentage of the discharging capacity value of 300 cycles relative to the discharging capacity of the 2 cycles. The results thus obtained were also shown in the Table 2.

In the cylindrical nonaqueous electrolyte secondary battery of the Example 8, the energy density of the battery was 425 Wh/l as shown in the Table 2, and accordingly, it was recognized that the excellent energy density was obtained. Further, as shown in Fig. 7, the discharging capacity ratio in the 300 cycles was 86 %, and accordingly, it was recognized that the excellent charging and discharging characteristics were obtained.

When the above-described results were compared with the results of the Comparative Examples 4 and 5 described below, it was proved that the present invention was applied to get improvement effects both in the energy density and the charging and discharging cyclic characteristics of the battery.

In the cylindrical nonaqueous electrolyte secondary battery of the Example 9, the energy density of the battery was 408 Wh/l as shown in the Table 2, and accordingly, it was recognized that the excellent energy density was obtained. Further, as shown in Fig. 7, the discharging capacity ratio in the 300 cycles was 94 %, and accordingly, it was recognized that the excellent charging and discharging characteristics were obtained.

When the above-described results were compared with the results of the Comparative Examples 4 and 5 described below, it was proved that the present invention was applied to get improvement effects both in the energy density and the charging and discharging cyclic characteristics of the battery.

In the cylindrical nonaqueous electrolyte secondary battery of the Example 10, the energy density of the battery was 415 Wh/l as shown in the Table 2, and accordingly, it was recognized that the excellent energy density was obtained. Further, as shown in Fig. 7, the discharging capacity ratio in the 300 cycles was 91 %, and accordingly, it was recognized that the excellent charging and discharging characteristics were obtained.

In the cylindrical nonaqueous electrolyte secondary battery of the Example 11, the discharging capacity ratio in the 300 cycles was 88.7 %. Thus, it was recognized that the excellent charging and discharging cyclic characteristics equivalent to those of the Examples 8 to 10 were obtained as shown in Fig. 7. Further, it was also recognized that 346 Wh/l was obtained as the energy density of the battery as shown in the Table 2.

When the above-described results were compared with the results of the Comparative Examples 4 and 5 described below, it was proved that the present invention was applied to get improvement effects both in the energy density and the charging and discharging cyclic characteristics of the battery.

In the cylindrical nonaqueous electrolyte secondary battery of the Comparative Example 4, it was recognized that the energy density of the battery was 386 Wh/l as shown in the Table 2. However, as shown in Fig. 7, the discharging capacity ratio in the 300 cycles was obviously deteriorated and lowered to 6.7 %, and accordingly, it was recognized that good charging and discharging cyclic characteristics were not obtained.

In the cylindrical nonaqueous electrolyte secondary battery of the Comparative Example 5, it was recognized that the energy density of the battery was 390 Wh/l as shown in the Table 2. However, as shown in Fig. 7, the discharging capacity ratio in the 300 cycles was obviously deteriorated and lowered to 14.2 %, and accordingly, it was recognized that good charging and discharging characteristics were not obtained.

As described above, even when the mixture of the granulated graphite and the fibrous graphite is used as the anode base materials, in case the fibrous graphite having the average diameter of fiber of 60 µm or larger is employed, the effects of the present invention cannot be sufficiently obtained. Therefore, the average diameter of fiber of the conductive fibers to be mixed with the granulated graphite may be preferably 60 µm or smaller.

In the cylindrical nonaqueous electrolyte secondary battery of the Comparative Example 6, it was recognized that the discharging capacity ratio in the 300 cycles was 91.7 % and the excellent charging and discharging cyclic characteristics equivalent to those of the Examples 8 to 10 were obtained as shown in Fig. 7. However, the energy density was 301 Wh/l as shown in the Table 2, and accordingly, it was recognized that good energy density was not obtained.

From these experimental results, it was recognized the materials and the technology related to the anode of the present invention were utilized to realize the nonaqueous electrolyte secondary battery having the high energy density and the excellent charging and discharging cyclic characteristics.

The anode active material according to the present invention used for a nonaqueous electrolyte secondary battery comprising an anode including the anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes anode base materials capable of doping and dedoping the light metal in an ionic state and fibrous materials having an electric conductivity.

Since, in the anode active material according to the present invention configured as described above, the fibrous materials having the electric conductivity are included in the anode base materials capable of doping and dedoping the light metal in the ionic state, the conductive fibrous materials respectively serve to connect the anode base materials together and the anode base materials to the anode current collector, so that the adhesive strength between the anode base materials and between the anode base materials and the anode current collector is increased. Accordingly, when the anode active material is used as the anode material of the nonaqueous electrolyte secondary battery, the separation phenomenon of the anode active material from the current collector, that is, the destruction of the adhesive interfaces can be prevented from occurring. Thus, the deterioration of the current collecting performance of the anode active material can be prevented.

As a result, the increase of a polarization phenomenon upon charging and discharging reactions resulting from the degradation of the current collecting performance of the anode material can be prevented. Further, the induction of the chemical deterioration of the nonaqueous electrolyte materials on the surfaces of the anode and the cathode can be avoided. Therefore, the charging and discharging cyclic characteristics of the nonaqueous electrolyte secondary battery can be prevented from being deteriorated.

Further, since the conductive fibers can improve electric conductivity in parts between the anode base materials and between the anode base materials and the anode current collector due to their electric conductivity, the anode material excellent in its charging and discharging capacity characteristics can be realized.

The nonaqueous electrolyte secondary battery according to the present invention comprises an anode including an anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes anode base materials capable of doping and dedoping the light metal in an ionic state and fibrous materials having an electric conductivity.

In the nonaqueous electrolyte secondary battery configured as described above, the conductive fibrous materials are included in the anode active material capable of doping and dedoping the light metal in the ionic state, that is, in the anode base materials so that the fibrous materials respectively serve to connect the anode base materials together and the anode base materials to the anode current collector, and accordingly, the adhesive strength between the anode base materials and between the anode base materials and the anode current collector is increased. Accordingly, when the anode active material is used as the anode material of the above-described nonaqueous electrolyte secondary battery, the separation phenomenon of the anode active material from the current collector, that is, the destruction of the adhesive interfaces can be prevented from occurring. Thus, the deterioration of the current collecting performance of the anode active material can be prevented.

As a result, the increase of a polarization phenomenon upon charging and discharging reactions resulting from the degradation of the current collecting performance of the anode material can be prevented. Further, the induction of the chemical deterioration of the nonaqueous electrolyte materials on the surfaces of the anode and the cathode can be avoided. Therefore, the charging and discharging cyclic characteristics of the nonaqueous electrolyte secondary battery can be prevented from being deteriorated.

Further, since the conductive fibers can improve electric conductivity in the parts between the anode base materials and between the anode base materials and the anode current collector due to their electric conductivity, the nonaqueous electrolyte secondary battery excellent in its charging and discharging cyclic characteristics can be realized.

Thus, according to the present invention, the anode material excellent in its charging and discharging capacity characteristics and the nonaqueous electrolyte secondary battery excellent in its charging and discharging cyclic characteristics can be provided.

## Claims

1. An anode active material used for a nonaqueous electrolyte secondary battery comprising an anode including the anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes an anode base material capable of doping and dedoping the light metal in an ionic state and a fibrous material having an electric conductivity.

2. The anode active material according to claim 1, wherein the light metal is alkali metal or alkali earth metal.

3. The anode active material according to claim 2, wherein the alkali metal is lithium.

4. The anode active material according to claim 1, wherein the fibrous material having the electric conductivity is composed of a material having a carbonaceous material as a main component.

5. The anode active material according to claim 4, wherein the material including the carbonaceous material as the main component is graphite.

6. The anode active material according to claim 1, wherein the anode base material includes graphite.

7. The anode active material according to claim 1, wherein the average diameter of a fiber of the fibrous material having the electric conductivity is larger than 0.005 µm and smaller than 60 nm.

8. The anode active material according to claim 1, wherein the percentage content of the fibrous material having the electric conductivity in the anode active material is not less than 0.1 wt% and not more than 45 wt% relative to the weight of the anode base material.

9. A nonaqueous electrolyte secondary battery comprising an anode including an anode active material, a cathode including a cathode active material and a nonaqueous electrolyte, the capacity of the anode being expressed by the sum of a capacity component obtained when light metal is doped and dedoped in an ionic state and a capacity component obtained when the light metal is deposited and dissolved, wherein the anode active material includes an anode base material capable of doping and dedoping the light metal in an ionic state and a fibrous material having an electric conductivity.

10. The nonaqueous electrolyte secondary battery according to claim 9, wherein the light metal is alkali metal or alkali earth metal.

11. The nonaqueous electrolyte secondary battery according to claim 10, wherein the alkali metal is lithium.

12. The nonaqueous electrolyte secondary battery according to claim 9, wherein the fibrous material having the electric conductivity is composed of a material having a carbonaceous material as a main component.

13. The nonaqueous electrolyte secondary battery according to claim 12, wherein the material including the carbonaceous material as the main component is graphite.

14. The nonaqueous electrolyte secondary battery according to claim 9, wherein the anode base material includes graphite.

15. The nonaqueous electrolyte secondary battery according to claim 9, wherein the average diameter of a fiber of the fibrous material having the electric conductivity is larger than 0.005 µm and smaller than 60 nm.

16. The nonaqueous electrolyte secondary battery according to claim 9, wherein the percentage content of the fibrous material having the electric conductivity in the anode active material is not less than 0.1 wt% and not more than 45 wt% relative to the weight of the anode base material.
